# EUROPEAN PATENT APPLICATION

(11) **EP 3 435 138 A1**
(43) Date of publication of application: **30.01.2019**
(21) Application number: 17183808.9
(22) Date of filing: 28.07.2017
(51) Int. Cl.: G02B 27/01

(54) **DEVICE FOR PROVIDING A PANORAMIC VIEW OR A BINOCULAR VIEW FOR A MONOCULAR EYE**

(71) Applicant: Vestel Elektronik Sanayi ve Ticaret A.S., 45030 Manisa (TR)
(72) Inventor: KUYUCU, Ömer Gökce, 45030 Manisa (TR)
(74) Representative: Ascherl, Andreas

(57) **Abstract**

A device (1) for providing a panoramic view or a binocular view for a monocular eye (2) is disclosed, wherein the device (1) comprises an Augmented Reality eyepiece (3) adapted to be placed in front of the monocular eye (2) when the Augmented Reality eyepiece (3) is worn on a human head, and adapted to allow see-through viewing of the environment by the monocular eye (2), as well as, reflection of an image (5) from an image source (4) onto a surface of the Augmented Reality eyepiece (3), the image source (4) adapted to receive the image (5) related to a non-visual area (8) of the monocular eye (2) and to focus the image (5) of the non-visual area (8) onto an Augmented Reality reflector (6), wherein the non-visual area (8) of the monocular eye (2) is an area in the environment blocked for viewing by nose (7) of the user, and the Augmented Reality reflector (6) placed in proximity of the Augmented Reality eyepiece (3) and the image source (4), such that the Augmented Reality reflector (6) receives the image (5) of the non-visual area (8) of the monocular eye (2) and reflects onto a first part (9) of the Augmented Reality eyepiece (3), while allowing see-through of a non-stereoscopic view (10) of the monocular eye (2) via a second part (11) of the Augmented Reality eyepiece (3), so to provide either a panoramic view (22) for the monocular eye (2) or a binocular view (23) for the monocular eye (2), wherein the binocular view (23) is provided by overlapping of the reflected image (5) of the non-visual area (8) of the monocular eye (2) and the non-stereoscopic view (10) of the monocular eye (2).

## Description

This invention refers to a device for providing a panoramic view or a binocular view for a monocular eye according to claim 1.

### Background of the Invention

The human eye has three different vision for each eye. Two of the visions are monocular views on the left and right. Monocular view is defined as side view for each eye. The third one is binocular view, which is defined as overlap vision of two eyes.

Acquired monocular view effects vision of an individual in several ways. There are two main issues, which are uniformly and predominantly addressed by the published literature. The two primary deficits are loss of stereoscopic binocular vision and reduction of peripheral field of vision.

Monocular vision versus binocular vision results in approximately a 25% decrease in the size of the field of view. Monocularity causes an absence of stereopsis, which comes from the lack of comparison of retinal disparity present in binocular individuals. Monocular individuals will have decreased visual acuity, compared to their binocular counterparts, due to their lack of binocular summation. Binocular summation is the phenomenon by which people see better with both eyes together than by either eye alone. Monocular people will have impairment in their orientation with respect to space, which results from a lack of kinaesthetic cues arising from convergence (binocular "eye aiming") and accommodation (focusing).

Monocular vision of human eye decreases side view by around 10% - 25%, because of nose blocking. This is not due to loss of eye performance, rather this is caused by side view blocked by the nose. This leads to various vision related difficulties from the people who are having loss of vision in one eye.

Monocular vision has several disadvantages compared with Binocular vision, like visual acuity (mild), visual field (medium), stereopsis (strong) are the most affected ones. As an example, driving is one of the unpleasant daily activities for monocular vision people. During driving, additional mirrors are placed on special angular places. Even though, it helps monocular driver, however the driver must turn his head to see these mirrors.

US Patent US8477425 discloses an interactive head-mounted eyepiece with an integrated processor for handling content for display and an integrated image source for introducing the content to an optical assembly through which the user views a surrounding environment and the displayed content, wherein the optical assembly comprises a partially reflective, partially transmitting optical element that reflects a portion of image light from the image source and transmits scene light from a see-through view of the surrounding environment, so that a combined image comprised of portions of the reflected image light and the transmitted scene light is provided to a user's eye.

US Patent Application US20160085073 viewing systems comprising means for generating images of a preset object and a viewing device comprising a semitransparent projection screen on which said images are formed. The viewing system according to the invention comprises a piece of eyewear comprising two eyeglasses, the first eyeglass transmitting said images and the second not transmitting them, both eyeglasses transmitting the exterior landscape. The first eyeglass may be passively obturated via spectral selection or polarization or actively via sequential selection.

US Patent Application US20160085073 discloses an apparatus for viewing of an image of a scene, including a monocular device worn by a viewer which includes a first display for displaying a first two-dimensional image of the scene with a first perspective to one eye of the viewer, a second display for displaying a second two-dimensional image of the scene with a second perspective to the other eye of the viewer, wherein the first perspective of the scene is different from the second perspective of the scene so that the viewer perceives a three-dimensional image of the scene, while another viewer of the second display, that is not wearing a monocular device, views the two-dimensional image of the scene.

### Object of the Invention

It is therefore the object of the present invention to provide a technique for providing a panaromic view or a binocular view of an environment for a person with monocular eye.

### Description of the Invention

The before mentioned object is solved by a device for providing a panoramic view or a binocular view for a monocular eye according to claim 1.

A device for providing a panoramic view or a binocular view for a monocular eye, wherein the device comprises an Augmented Reality eyepiece adapted to be placed in front of a monocular eye, when the Augmented Reality eyepiece is worn on a human head, and adapted to allow see-through viewing of the environment by the monocular eye, as well as, reflection of an image from an image source onto a surface of the eyepiece, the image source adapted to receive the image related to a non-visual area of the monocular eye and to focus the image of the non-visual area onto an Augmented Reality reflector, wherein the non-visual area of the eye is an area in an environment blocked for viewing by nose of the user, and the Augmented Reality reflector placed in proximity of the Augmented Reality eyepiece and the image source, such that the Augmented Reality reflector receives the image of the non-visual area of the eye and reflects onto a first part of the Augmented Reality eyepiece, while allowing see-through of a non-stereoscopic view of the eye via a second part of the Augmented Reality eyepiece, so that to provide either a panoramic view for the monocular eye, or a binocular view for the monocular eye, wherein the binocular view is provided by overlapping of the reflected image of the non-visual area of the eye and the non-stereoscopic view of the eye.

The person with a monocular vision is only able to see through one eye, and further a substantial part of the view is blocked due to nose of the person, and the healthy eye is not able to see the blocked view until the person turns his head. This makes it uneasy for the person with vision in one eye to have a panaromic view or a binocular view of the environment. With the above-said embodiment, the blocked view is captured and presented by the image source to the Augmented Reality reflector which focuses it to the first part of the Augmented Reality eyepiece. Hence, the person is presented with the blocked view and the non-stereoscopic view together providing a panaromic vision, or through help of overlap of the blocked view and the non-stereoscopic view with slightly binocular vision.

Further preferred embodiments are subject-matter of dependent claims and/or of the following specification parts.

According to a preferred embodiment of the device, wherein the ratio between the first part and the second part of the Augmented Reality eyepiece is in a ratio ranging between 30:70 to 25:75.

This embodiment is beneficial as it provides an optimal division of the Augmented Reality eyepiece, so that the panoramic view or the binocular view is optimally presented with minimal or no loss of complete view of the environment.

According to a further embodiment of the system, wherein the image related to the non-visual area of the eye is a real image captured from the environment or graphical representation of the real image captured from the environment.

This embodiment is helpful, as it provided for processed image of the blocked view, as well as real image of the blocked view, as per user's choice.

According to another embodiment of the device, the device includes a control for changing mode for sending the image related to non-visual area of the eye between the real image and the graphical representation of the real image.

This embodiment is beneficial, as it provides for a control to the user to easily switch between the real images or graphical representation of the real images.

According to a further preferred embodiment of the device, wherein the image source comprises a camera capturing the image related to the non-visual area of the eye in real time.

This embodiment is beneficial, as it provides for the camera to be integrated directly into the device and that to into the image source, hence reduce bottleneck for performance of the device by reducing communication medium between external camera and the image source. Integrated camera also makes the maintenance of the device easier as dependency on external elements is reduced.

According to a further embodiment of the device, wherein the camera is a 180-degree scanning camera.

This embodiment is beneficial, as 180-degree scanning camera has a wider field of view, and can provide view of the blocked area efficiently, and with minimal image processing steps.

According to another embodiment of the device, the device comprising an eye tracking module adapted to track a position of the eye in front of which the Augmented Reality eyepiece is placed, and to accordingly change overlapping of the reflected image of the non-visual area of the eye and the non-stereoscopic view of the eye based on change in position of the eye.

This embodiment is beneficial, as it tracks the movement of monocular eye to effectively provide binocular vision based on change in position of the eye.

According to a further preferred embodiment of the device, the device comprising a speed detection module adapted to detect speed of an object moving in the environment, to identify if the speed of the object is greater than a threshold and to accordingly raise an alarm.

This embodiment is beneficial, as it helps the user to identify non-standard actions taking place in the environment, and effectively alarming wearer of the device to make him ready to deal with such non-standard actions.

According to a further embodiment of the device, wherein the alarm comprises changing color for the view or part of the view, changing color the object which is in breach of the threshold, or raising a sound.

This embodiment is beneficial, as it provides for effective alarming modes to the wearer of the device, so that the wearer can timely take notice of any non-standard action and can be ready to deal with it.

According to another embodiment of the device, wherein the image source is either a micro-projector or a pico-projector.

This embodiment is beneficial, as it provides for effective focusing mechanism for the images of the blocked view.

According to a further embodiment of the device, the device comprising a non-Augmented Reality eyepiece which is to be placed in front of an eye with vision defect, and wherein the Augmented Reality eyepiece is to be placed before the eye having proper vision.

This embodiment is beneficial, as it provides for a cost effective and easy to use device to be worn by the user of the device.

Further benefits, goals and features of the present invention will be described by the following specification of the attached figures, in which components of the invention are exemplarily illustrated. Components of the devices and method according to the inventions, which match at least essentially with respect to their function, can be marked with the same reference sign, wherein such components do not have to be marked or described in all figures.

The invention is just exemplarily described with respect to the attached figure in the following.

### Brief Description of the Drawings

Fig. 1 shows a schematic diagram explaining vision of a monocular eye;
Fig. 2 shows a glass to be worn by a person having a monocular eye for providing a panoramic view or a binocular view; and
Fig. 3 shows a schematic diagram of a device for providing a panoramic view or a binocular view for a monocular eye.

### Detailed Description of the Drawings

The present invention focuses on providing a panoramic view or a binocular view for a person having only eye one with the vision, i.e., a monocular eye, while the other eye is with no vision or almost no vision.

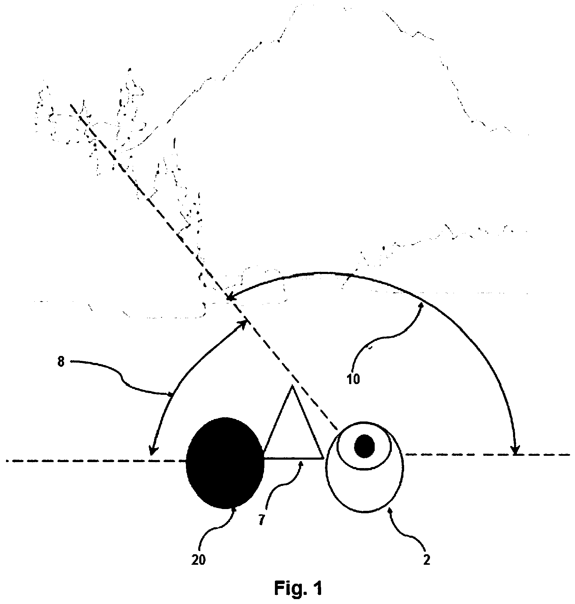

Fig. 1 shows a schematic diagram explaining vision by a monocular eye 2. The figure shows a pair of eyes 2, 20 of a person, a monocular eye 2 with proper vision, and an eye 20 with vision defect, and the nose 7 of the person. Due to the vision defect, the person is not able to properly see through or not at all see through the eye 20 with vision defect. Hence, only the monocular eye 2 is available for providing view of the environment. However, due to the nose 7 of the person, the complete view of the environment is blocked for the monocular eye 2. The figure 1 shows the environment to be divided into two parts, a visible area visible to the monocular eye 2 and represents to be non-stereoscopic view 10 of the monocular eye 2, and a non-visual area 8 which is blocked to the monocular eye 2 due to nose 7. Due to the blocked view, the person needs to turn his head quite often to have a comprehensive view and understanding of the environment. This makes it inconvenient and difficult for the person to keep track of its environment.

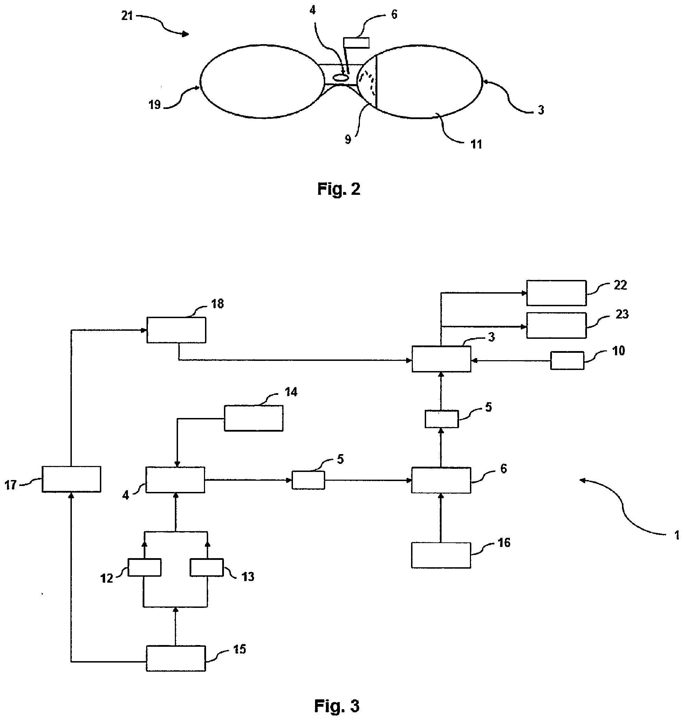

To help out the person with only one eye having proper vision, a glass 21 is disclosed in Fig. 2 which can be worn by the person for providing a comprehensive view to the person. The glass 21 is part of a device, which is discussed in detail in Fig. 3.

Fig. 2 shows the glasses 21 in a perspective view having two eyepieces 3, 19, i.e., an Augmented Reality eyepiece 2, and a non-Augmented Reality eyepiece 19. The Augmented Reality eyepiece 3 is to be worn on monocular eye, which is having proper vision, and the non-Augmented Reality eyepiece 19 is to be worn on the eye with the vision defect.

The Augmented Reality eyepiece 3 allows see-through viewing of the environment by the monocular eye, as well as, reflection of an image onto a surface of the Augmented Reality eyepiece 3. See-through viewing from the Augmented Reality eyepiece 3 provides for non-stereoscopic view to the monocular eye. While, reflection of the image 5 onto the surface of the Augmented Reality eyepiece 3 provides for view of the non-visual area of the environment blocked by nose of the wearer of the glasses.

The glasses 21 are also having an image source 4 and an Augmented Reality reflector 6. The image source 4 receives the image related to the non-visual area of the monocular eye and focuses the image of the non-visual area onto the Augmented Reality reflector 6. The Augmented Reality reflector 6 is placed in proximity of the Augmented Reality eyepiece 3 and the image source 4. The image source 4 is provided on a stem connecting the eyepieces 3, 19. The Augmented Reality reflector 6 shall be extended from the part of the stem to be in front of the image source 4. The placement of the Augmented Reality reflector 6 is such that it receives the image of the non-visual area of the monocular eye from the image source 4 and reflects it onto a first part 9 of the Augmented Reality eyepiece 3. While from a second part 11 of the Augmented Reality eyepiece 3 is enabled for see-through capabilities and having of a non-stereoscopic view of the monocular eye. This helps to provide either the panoramic view for the monocular eye, or the binocular view for the monocular eye. The binocular view is provided by overlapping of the reflected image of the non-visual area of the monocular eye and the non-stereoscopic view of the monocular eye.

In one embodiment, the ratio between the first part 9 and the second part 11 of the Augmented Reality eyepiece 3 is in a ratio ranging between 30:70 to 25:75. This provides for optimal providing of a comprehensive view of the environment to the monocular eye. Generally, the non-visual area for the monocular eye due to nose blocking is around 25-20%. To provide a comprehensive view of the environment, there should be an intersection of the reflected image received on the first part 9 and the non-stereoscopic view through the second part 11 of the Augmented Reality eyepiece 3. This intersection should be around 5 degrees. Hence, the above-said ratio of the first part 9 and the second part 11 of the Augmented Reality eyepiece 3 is optimal to provide comprehensive view of the environment to the monocular eye.

Fig. 3 shows a schematic diagram of the device 1 for providing the panoramic view 22 or the binocular view 23 for the monocular eye. The device 1 includes the Augmented Reality eyepiece 3, the image source 4, the Augmented Reality reflector 6, and the camera 15 which cooperates together to provide for the panoramic view 22 or the binocular view 23 for the monocular eye.

The Augmented Reality eyepiece 3 is to be placed before the monocular eye, and the image 5 of the non-visual area of the monocular eye is reflected onto a part of the Augmented Reality eyepiece 3, while through remaining part of the Augmented Reality eyepiece 3, the user of the device 1 can see-through and produces a non-stereoscopic view 10 of the monocular eye. The image 5 of the non-visual area and the non-stereoscopic view 10 together provides for the panoramic view 22, or the binocular view 23 is provided by overlapping of the reflected image 5 of the non-visual area of the monocular eye and the non-stereoscopic view 10 of the monocular eye.

The image 5 of the non-visual area of the monocular eye is received from the image source 4 after being reflected by the Augmented Reality reflector 6. The image source 4 can be a micro-projector or a pico-projector, which helps in projecting the image 5 of the non-visual area onto the Augmented Reality reflector 6.

The image 5 of the non-visual area of the monocular eye can be a real image 12 of the non-visual area of the monocular eye, or it can be a graphical representation 13 of the real image 12 produces after applying image processing techniques onto the real image 12 of the non-visual area of the monocular eye.

The camera 15 captures a real image 12 of the non-visual area of the environment, which is blocked by the nose of the user of the device 1. The camera 15 can either directly transmit the real image 12 of the non-visual area to the image source 4 or can process it to create a graphical representation 13 of the real image 12 and sends the graphical representation 13 of the real image 12 to the image source 4. In one embodiment, the real image 12 of the non-visual area is processed by the image source itself to convert it into a graphical representation 13 of the real image 12, while the camera 15 only provides the real image 12 of the non-visual area to the image source 4.

In one embodiment, the functionality of the camera 15 for capturing the image 5 of the non-visual are of the monocular eye is integrated into the functionality of the image source 4 for sending the image 5 to the Augmented Reality reflector 6 into one single module, and there is no need for having two separate units for image capturing and projecting of the image onto the Augmented Reality reflector 6.

In another embodiment, the camera 15 is a 180-degree scanning camera which provides a wider field of view and helps in providing optimal image 5 of the non-visual area, which can help in providing a comprehensive view for the person with the monocular eye.

To control whether the graphical representation 13 of the real image 12 is to be sent to the Augmented Reality reflector 6 or the real image 12 of the non-visual area is to be sent to the to the Augmented Reality reflector 6, a control unit 14 is provided which shall change the mode for sending the image 5 related to non-visual area 8 of the monocular eye 2 between the real image 12 and the graphical representation 13 of the real image 12. This control can be connected to the image source 4, so that it can switch between sending of the image related to non-visual area either to the real image 12 and the graphical representation 13 of the real image 12. In cases, where the image processing to produce graphical representation 13 is provided at the image source 4, the control unit 14 helps in optimizing the functionality of the image source 4 for processing of the real image 12. In case, where the graphical representation 13 is produced at the camera 15 itself, the image source 4 instructs the camera 15 to provide the real image 12 or the graphical representation 13 of the real image 12, accordingly the functionality of image processing is optimized at the camera 15. In one embodiment, the control can be provided in connection to the camera 15 itself where the image processing for graphical representation 13 is performed at camera 15, so that the functionality of image processing is optimized at the camera 15. Based on the control unit 14 trigger the camera shall either directly send the real image 12 to the image source 4, or processes the real image 12 to produce the graphical representation 13 and then sends it to the image source 4.

The device 1 also includes an eye tracking module 16 which tracks a position of the monocular eye in front of which the Augmented Reality eyepiece is placed. The eye tracking module 16 accordingly facilitate change in overlapping of the reflected image 5 of the non-visual area of the monocular eye and the non-stereoscopic view 10 of the monocular eye based on change in position of the monocular eye. The eye tracking module 16 shall also determine the angle for the monocular eye and the Augmented Reality reflector 6. Accordingly, the eye tracking module 16 is in communication coupling to the Augmented Reality reflector 6 to trigger the reflector 6 for changing the overlapping of the reflected image 5 of the non-visual area of the monocular eye and the non-stereoscopic view 10 of the monocular eye. It is to be noted that when the monocular eye turns to the non-visual area, the Angular Reality reflector 6 is triggered such that it can provide for the reflected image 5 with maximum angular view.

The device 1 also includes a speed detection module 17, which detects speed of an object moving in the environment, and identifies if the speed of the object is greater than a threshold and further accordingly raise an alarm 18. The alarm 18 can be changing color of the view or part of the view, changing color the object, which is in breach of the threshold, or raising a sound, or any other form of alarming mechanism, which can quickly grab the attention of the user of the device 1, so that he can be prepared for any non-standard action.

The speed detection module 17 can work based on speed detected using an accelerometer, or a GPS module, or using image processing techniques for the images captured by the camera 15.

The device 1 also has an application in Automotive industry as car front glass instead of the shown glasses.

Thus, the present invention provides for comprehensive view of the environment for a monocular eye of a user where the user is located. The comprehensive view is provided using a device 1 which may include the glasses 21 having both, non-Augmented Reality eyepiece 19 and the Augmented Reality eyepiece 3, or by just using the Augmented Reality eyepiece 3, and not a complete pair of glasses 21. The device 1 includes an Augmented Reality eyepiece 3 which is to be placed in front of the monocular eye 2 when the Augmented Reality eyepiece 3 is worn on a human head, and which allows see-through viewing of the environment by the monocular eye 2, as well as, reflection of an image 5 from an image source 4 onto a surface of the Augmented Reality eyepiece 3, the image source 4 which receives the image 5 related to a non-visual area 8 of the monocular eye 2 and focuses the image 5 of the non-visual area 8 onto an Augmented Reality reflector 6, wherein the non-visual area 8 of the monocular eye 2 is an area in the environment blocked for viewing by nose 7 of the user, and the Augmented Reality reflector 6 is placed in proximity of the Augmented Reality eyepiece 3 and the image source 4, such that the Augmented Reality reflector 6 receives the image 5 of the non-visual area 8 of the monocular eye 2 and reflects it onto a first part 9 of the Augmented Reality eyepiece 3, while allowing see-through of a non-stereoscopic view 10 of the monocular eye 2 via a second part 11 of the Augmented Reality eyepiece 3, so to provide either a panoramic view 22 for the monocular eye 2 or a binocular view 23 for the monocular eye 2, wherein the binocular view 23 is provided by overlapping of the reflected image 5 of the non-visual area 8 of the monocular eye 2 and the non-stereoscopic view 10 of the monocular eye 2.

In summary, a device 1 for providing a panoramic view or a binocular view for a monocular eye 2 is disclosed, wherein the device 1 comprises an Augmented Reality eyepiece 3 adapted to be placed in front of the monocular eye 2 when the Augmented Reality eyepiece 3 is worn on a human head, and adapted to allow see-through viewing of the environment by the monocular eye 2, and at the same time reflection of an image 5 from an image source 4 onto a surface of the Augmented Reality eyepiece 3, wherein the image source 4 is adapted to receive the image 5 related to a non-visual area 8 of the monocular eye 2 and to focus the image 5 of the non-visual area 8 onto an Augmented Reality reflector 6, wherein the non-visual area 8 of the monocular eye 2 is an area in the environment blocked for viewing by nose 7 of the user, and the Augmented Reality reflector 6 placed in proximity of the Augmented Reality eyepiece 3 and the image source 4, such that the Augmented Reality reflector 6 receives the image 5 of the non-visual area 8 of the monocular eye 2 and reflects onto a first part 9 of the Augmented Reality eyepiece 3, while allowing see-through of a non-stereoscopic view 10 of the monocular eye 2 via a second part 11 of the Augmented Reality eyepiece 3, so to provide either a panoramic view 22 for the monocular eye 2 or a binocular view 23 for the monocular eye 2, wherein the binocular view 23 is provided by overlapping of the reflected image 5 of the non-visual area 8 of the monocular eye 2 and the non-stereoscopic view 10 of the monocular eye 2.

### List of reference numbers

- 1: device
- 2: monocular eye
- 3: Augmented Reality eyepiece
- 4: image source
- 5: image/ reflected image
- 6: Augmented Reality reflector
- 7: nose
- 8: non-visual area
- 9: first part of the Augmented Reality eyepiece
- 10: non-stereoscopic view
- 11: second part of the Augmented Reality eyepiece
- 12: real image
- 13: graphical representation of the real image
- 14: control
- 15: camera
- 16: eye tracking module
- 17: speed detection module
- 18: alarm
- 19: non-augmented reality eyepiece
- 20: eye with vision defect
- 21: glasses
- 22: panoramic view for the monocular eye
- 23: binocular view for the monocular eye

## Claims

1. A device (1) for providing a panoramic view or a binocular view for a monocular eye (2), the device (1) comprises:
- an Augmented Reality eyepiece (3) adapted to be placed in front of the monocular eye (2) when the Augmented Reality eyepiece (3) is worn on a human head, and adapted to allow see-through viewing of the environment by the monocular eye (2), as well as, reflection of an image (5) from an image source (4) onto a surface of the Augmented Reality eyepiece (3);
- the image source (4) adapted to receive the image (5) related to a non-visual area (8) of the monocular eye (2) and to focus the image (5) of the non-visual area (8) onto an Augmented Reality reflector (6), wherein the non-visual area (8) of the monocular eye (2) is an area in the environment blocked for viewing by a nose (7) of the user;
- the Augmented Reality reflector (6) placed in proximity of the Augmented Reality eyepiece (3) and the image source (4), such that the Augmented Reality reflector (6) receives the image (5) of the non-visual area (8) of the monocular eye (2) and reflects onto a first part (9) of the Augmented Reality eyepiece (3), while allowing see-through of a non-stereoscopic view (10) of the monocular eye (2) via a second part (11) of the Augmented Reality eyepiece (3), so to provide either a panoramic view (22) for the monocular eye (2) or a binocular view (23) for the monocular eye (2),
wherein the binocular view (23) is provided by overlapping of the reflected image (5) of the non-visual area (8) of the monocular eye (2) and the non-stereoscopic view (10) of the monocular eye (2).

2. The device (1) according to the claim 1, wherein the ratio between the first part (9) and the second part (11) of the Augmented Reality eyepiece (3) is in a ratio ranging between 30:70 to 25:75.

3. The device (1) according to any of the claims 1 or 2, wherein the image (5) related to the non-visual area (8) of the monocular eye (2) is a real image (12) captured from the environment or a graphical representation (13) of the real image (12) captured from the environment.

4. The device (1) according to the claim 3 comprising a control (14) for changing mode for sending the image (5) related to non-visual area (8) of the monocular eye (2) between the real image (12) and the graphical representation (13) of the real image (12).

5. The device (1) according to any of the claims 1 to 4, wherein the image source (4) comprises a camera (15) capturing the image (5) related to the non-visual area (8) of the monocular eye (2) in real time.

6. The device (1) according to the claim 5, wherein the camera (15) is a 180-degree scanning camera.

7. The device (1) according to any of the claims 1 to 6 comprising an eye tracking module (16) adapted to track a position of the monocular eye (2) in front of which the Augmented Reality eyepiece (3) is placed, and to accordingly change overlapping of the reflected image (5) of the non-visual area (8) of the monocular eye (2) and the non-stereoscopic view (10) of the monocular eye (2) based on change in position of the monocular eye (2).

8. The device (1) according to any of the claims 1 to 7 comprising a speed detection module (17) adapted to detect speed of an object moving in the environment, to identify if the speed of the object is greater than a threshold and to accordingly raise an alarm (18).

9. The device (1) according to the claim 8, wherein the alarm (18) comprises changing color for the view (22, 23) or part of the view (22, 23), changing color the object which is in breach of the threshold, or raising a sound.

10. The device (1) according to any of the claims 1 to 9, wherein the image source (4) is either a micro-projector or a pico-projector.

11. The device (1) according to any of the claims 1 to 10 comprising a non-Augmented Reality eyepiece (19) which is to be placed in front of an eye (2) with vision defect, and wherein the Augmented Reality eyepiece (3) is to be placed before the monocular eye (2) which is having proper vision.
